# EUROPEAN PATENT SPECIFICATION

(11) **EP 0 350 185 B1**
(45) Date of publication and mention of the grant of the patent: **13.04.1994**
(21) Application number: 89306396.6
(22) Date of filing: 23.06.1989
(51) Int. Cl.: G01F 23/76

(54) **Fuel tank float**
Kraftstofftankschwimmer
Flotteur pour réservoir de carburant

(30) Priority: 07.07.1988 US 215991
(43) Date of publication of application: 10.01.1990
(73) Proprietor: MACROTECH FLUID SEALING, INC., Salt Lake City Utah 84104 (US)
(72) Inventor: Rericha, Brian F., Downers Grove Illinois 60515 (US); Miller, Paul H., Wheaton Illinois 60188 (US)
(74) Representative: Senior, Alan Murray

(56) References cited:
- EP-A- 0 298 529
- WO-A-80/02592
- NL-A- 7 204 966
- US-A- 3 145 727
- US-A- 4 189 786
- PATENT ABSTRACTS OF JAPAN vol. 10, no. 215 (P-481)(2271) 26 July 1986, & JP-A-61 53521
- PATENT ABSTRACTS OF JAPAN vol. 7, no. 220 (P-226)(1365) 30 September 1983, & JP-A-58 111722

## Description

The instant invention relates to fuel tank floats for use with gasoline-alcohol fuels.

Known fuel tank floats are often made of brass or various types of foam rubber. Brass presents a problem due to its high cost. Foam rubber is available cheaply, but decomposes in gasoline-alcohol mixtures.

JP-A-6153521 discloses a float for measuring levels of oil, the float comprising a polyamide foam moulded body.

US-A-3145727 discloses an automatic liquid level control device having a substantially hollow spherical float.

WO-A-8002592, on which the precharacterising portion of appended claim 1 is based, discloses a float for use in tank gauging systems, the float comprising a shell formed of a mixture of epoxy resin and miniature glass balloons and a core of foamed urethane.

The object of the instant invention is to provide an inexpensive fuel tank float that does not decompose in gasoline-alcohol mixtures and still maintains its desired specific gravity if the float develops a leak.

According to the present invention there is provided a float for gauging the level of a gasoline-alcohol fuel in a tank, said float comprising
a closed container composed of a first material resistant to said fuel; and
a second material in said container having a specific gravity lower than said fuel; characterised in that
said second material is in a slurry with a medium substantially similar to said fuel.

The specific gravity of the aforementioned low specific gravity material is low enough to provide sufficient buoyancy for the entire float.

Preferably the second material comprises hollow spherical glass beads.

The invention will be more clearly understood from the following description, given by way of example only with reference to the accompanying drawings in which:
Figure 1 is a cross sectional view of a float in accordance with the present invention; and
Figure 2 is an enlarged view of circle 2 of FIG. 1 of this float interior, showing in detail the arrangement of the low specific gravity material.

### DETAILED DESCRIPTION OF THE PREFERRED EMBODIMENT OF THE INVENTION

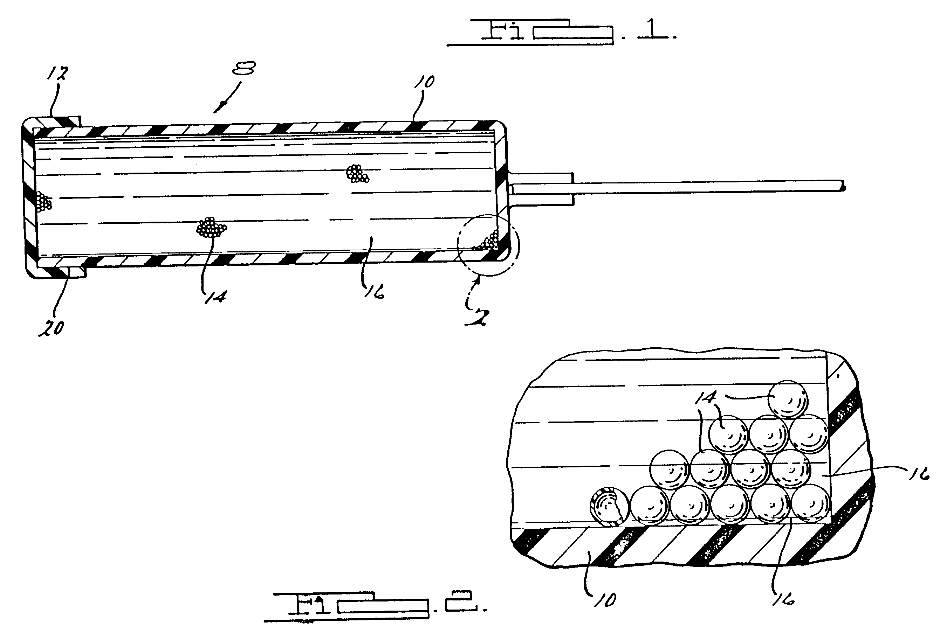

As seen in FIG. 1, a float 8, in accordance with the preferred construction embodiment of this invention comprises a plastic container 10 and cap 12 formed of a material that is resistant to gasoline-alcohol mixtures. In accordance with one feature of this instant invention, the container 10 is filled with a slurry of a low specific gravity material such as hollow glass beads 14 in a gasoline-alcohol medium 16 substantially similar to the fuel (not shown) being gauged. The beads 14 have a low enough specific gravity so that the filled closed container 10 is buoyant in the fuel (not shown) being gauged. The gasoline-alcohol medium 16 prevents an inflow of fuel, and a corresponding change in the specific gravity of the float 8, should the float 8 leak. The cap 12 is snap fit, screwed, or ultrasonically welded to the container.

## Claims

1. A float (8) for gauging the level of a gasoline-alcohol fuel in a tank, said float (8) comprising
a closed container (10) composed of a first material resistant to said fuel; and
a second material (14) in said container having a specific gravity lower than said fuel; characterised in that
said second material (14) is in a slurry with a medium (16) substantially similar to said fuel.

2. A fuel tank float according to claim 1 wherein said second material (14) comprises hollow spherical glass beads.

## Patentansprüche

1. Schwimmer (8) zur Füllstandsmessung eines Benzin-Alkohol-Treibstoffes in einem Tank, mit
einem geschlossenen Behälter (10) bestehend aus einem ersten, gegenüber dem Treibstoff resistenten Material und
einem zweiten Material (14) in dem Behälter, welches ein geringeres spezifisches Gewicht als der Treibstoff besitzt,
dadurch **gekennzeichnet,**
daß das zweite Material (14) sich in einer Suspension mit einem Medium (16) befindet, welches im wesentlichen dem Treibstoff gleicht.

2. Treibstofftank-Schwimmer nach Anspruch 1, bei dem das zweite Material (14) hohle, kugelförmige Glaskügelchen aufweist.

## Revendications

1. Flotteur (8) pour jauger le niveau d'un carburant essence/alcool dans un réservoir, ledit flotteur (8) comprenant :
un logement (10) fermé, réalisé dans un premier matériau résistant audit carburant ; et
un second matériau (14) dans ledit logement présentant une densité inférieure audit carburant : caractérisé en ce que
ledit second matériau (14) est en suspension dans un milieu (16) essentiellement similaire audit carburant.

2. Flotteur pour réservoir de carburant selon la revendication 1, caractérisé en ce que ledit second matériau (14) comprend des billes de verre sphériques creuses.
